Europäisches Patentamt

European Patent Office

Office européen des brevets

(19)

(11) Publication number: **0 401 509**
**A1**

## (12) EUROPEAN PATENT APPLICATION

(21) Application number: **90108330.3**

(22) Date of filing: **02.05.90**

(51) Int. Cl.5: **C09J 7/02**

(30) Priority: **07.06.89 DE 3918616**

(43) Date of publication of application:
**12.12.90 Bulletin 90/50**

(84) Designated Contracting States:
**DE FR GB IT**

(71) Applicant: **MINNESOTA MINING AND MANUFACTURING COMPANY**
**3M Center**
**St. Paul Minnesota 55144(US)**

(72) Inventor: **Karim, Naimul, Dr.**
**Delratherstrasse 7A**
**D-4047 Stürzelberg(DE)**
Inventor: **Kreckel, Karl Werner**
**Benzenbergweg 3**
**D-5667 Haan(DE)**

(74) Representative: **Ruschke, Olaf et al**
**Ruschke & Partner Pienzenauerstrasse 2**
**D-8000 München 80(DE)**

(54) **Single side repositionable transfer tape.**

(57) A pressure-sensitive adhesive transfer tape comprising an adhesion-repellent backing provided on one side with a filler-loaded pressure-sensitive adhesive film. The amount of filler is greater on the backing side than on the off-backing side of the adhesive film, and the types and relative amounts of the filler material and the adhesive are selected to impart to the adhesive film on the low-filler side a relatively high adhesive power, whereby the adhesive film may adhere permanently to an article after having been transferred thereto. On the high-filler side, the adhesive power of the film is relatively low so that the article may be releasably attached to a substrate together with the adhesive film.

EP 0 401 509 A1

## SINGLE SIDE REPOSITIONABLE TRANSFER TAPE

### Background of the Invention

This invention relates to a normally tacky and pressure-sensitive adhesive tape comprising a dry-transferrable adhesive coating on an adhesion-repellent substrate or backing, i.e., on a release liner.

Adhesive tapes are known in which sheet material is provided with a layer of adhesive on both sides, the two layers differing in adhesion (see, e.g., U.S. Patents 3,643,662, 4,554,191 and 4,574,098; Japanese Patents 53-3973, 59-59-56471 and 61-23673; British Patent 1,439,104; Swiss Patent 473,209). Such tapes allow a first article to be joined firmly to a second article, with the more adhesive coating remaining firmly bonded to the first article while the less adhesive coating is removably bonded to the second article, so that the first article may be separated from and re-adhered to the second article, or may in fact be re-affixed to another article.

It is also known from U.S. Patent 4,702,948 to apply the same adhesive to both sides of a woven fabric, the coating on one side being a thin layer adhering only to the projecting peaks of the fabric, and the coating on the other side being heavy enough to fill the surface irregularities of the fabric so as to form an adhesive surface that is continuous and even, thus having a higher adhesive power.

DE-OS 35 37 433 discloses a pressure-sensitive adhesive tape in which polymeric microspheres are incorporated in the adhesive coat, causing the adhesive surface to be irregular.

The prior adhesive tapes are disadvantageous in that the tape or fabric material forming the substrate or carrier for the two coats of adhesive cause the resultant adhesive joints to be relatively thick; further, the substrate or carrier itself adds substantially to their cost.

U.S. Pat. No. 4,260,659 describes a transfer tape comprising two different adhesive materials of the same class which are coated consecutively onto an adhesion-repellent backing, with one of the adhesives being "hard" and the other "soft". The two adhesives have different shear properties.

DE-OS 22 06 916 discloses a self-adhesive tape comprising pressure-sensitive adhesives applied in two separate layers. The first layer has low adhesion and high cohesion, the second layer having high adhesion and low cohesion. The difference in cohesive and adhesive behavior is adjusted by locally controlled mixing and diffusion.

U.S. Pat. No. 3,202,535 discloses an aluminum foil backing to which two different pressure-sensitive silicone adhesive are consecutively applied.

U.S. Pat. No. 3,017,297 describes a pressure-sensitive transfer sheet comprising a backing on which are consecutively coated layers of a low-adhesion hard pigment and an adhesive. The product works in the manner of single-use ink ribbons for typewriters.

European Pat. No. 0,257,984 discloses an adhesive transfer tape in which hollow polymeric microspheres are incorporated in the adhesive. Because of its greater irregularity or unevenness, the surface of the adhesive opposite the backing has lower adhesion than the surface adjacent the backing. The adhesive matrix may comprise an isooctyl acrylate:acrylic acid copolymer emulsion or a rubber-resin adhesive. Increasing the rubber:resin ratio in the latter decreases adhesion but concurrently renders the adhesive film more elastic and hence more inconvenient to handle; if the rubber:resin ratio is too high, the film may stretch 20 or 30 times its original length when severed in a conventional tape dispenser, thereafter snapping back and forming a lump of adhesive.

Sheets of note-taking paper having tacky microspheres on the rear surface are marketed by Minnesota Mining and Manufacturing Company under the trademark "Post-it." These sheets may be repeatedly affixed to, removed from and replaced on paper without delaminating it. The adhesive used to this end has no measurable level of static shear strength so that it cannot be used for holding articles.

The release properties of adhesive tapes containing hollow polymeric microspheres - (see, e.g., U.S. Pats. No. 4,735,837 and 4,855,170) are the result of their irregular surface, which affords locally restricted contact to a substrate to which adhesion is to be effected.

### Summary of the Invention

The present invention provides a transfer tape that has a pressure-sensitive adhesive film comprising a rubber-resin adhesive filled with hollow polymeric microspheres, having a completely smooth surface on at least one side. Surprisingly, unlike the conventional acrylic based pressure-sensitive adhesive tapes, the tape of the present invention simultaneously exhibits releasability (no substantial build-up of the adhesive power), high static shear strength, different adhesion values on the two sides and good tearing properties. The conventional acrylic-based adhesive tapes are unsuited for the broad range of uses that this combination of properties makes possible.

The invention provides tape having a thin transferrable adhesive film that is easy to use in manually operated tape dispensers and that enables adhesive properties to be imparted to a wide variety of products in a repeatable and trouble-free manner.

The inventive adhesive film, which has different adhesive powers on its two sides, may be readily withdrawn from the release liner backing using a conventional dispenser of the kind used for pressure-sensitive adhesive tapes and be applied to any low-weight article which is to be temporarily secured in place, e.g., posters, visiting cards, photographs, signs, symbols, indicia, sheets of paper, or the like. Thereafter they may be adhered to, removed from and re-affixed to any other article - such as a sheet of paper - without causing damage (e.g., delaminating a sheet of paper).

The invention may be characterized as adhesive tape comprising an adhesion-repellent backing provided on one side with a transferrable pressure-sensitive adhesive film consisting of an adhesive matrix loaded with filler materials comprising hollow polymeric microspheres, especially elastic, non-tacky hollow thermoplastic microspheres, wherein the adhesive comprises a rubber-resin adhesive, the amount of filler on one side of the adhesive film being greater than on the opposite side. The types and relative amounts of filler and adhesive are so selected that the adhesive film has a relatively high adhesive power on the low-filler side so that the adhesive film adheres permanently to an article after having been transferred thereto, the adhesive film tearing off easily after having been applied to the article. The adhesive film has a relatively low adhesive power on the high-filler side so that the article may be releasably applied to a substrate together with the adhesive film.

Preferably, the adhesive material is a synthetic rubber of the ABA block copolymer type (such as the styrene-isoprene-styrene material commercially available under the trademark "Cariflex", or "Kraton", 1107) which has been tackified with a single resin having a mean softening temperature of 10 to 60°C, such as the product "ECR-366", a synthetic hydrocarbon resin having a softening temperature of 50°C.

The hollow polymeric microspheres may be, e.g., thermoplastic hollow microspheres of vinylidenechloride:acrylonitrile copolymer having a particle diameter of 25 to 60 μm and a density of 0.036 g/ml, such as "Expancel" DE 511). In addition, one or more of the following fillers may also be included in the adhesive: micropowder wax (e.g., synthetic micropowder dust with a mean diameter of <15 μm and a drip temperature of 140°C such as "Ceridust" 9615A), conventional glass or plastic fibers, and or hydrophobic fumed silica (e.g., "Aerosil" R972).

The tape of the invention may be made by first coating on an adhesion-repellent backing or substrate film, such as a silicone-coated polymer film release liner, a first layer comprising a blend of the adhesive and filler and then coating thereover a second layer consisting of only the adhesive or of a blend of the adhesive and a lower relative amount of filler than in the first layer.

The inventive adhesive tape exhibits excellent tearing properties, retains a high level of adhesion on the side incorporating little or no filler, and can be affixed in place repeatedly without altering or building up the adhesive power of the side incorporating a relatively greater amount of filler. Preferably, an adhesion build-up with time on the highly filler-loaded side (as will occur and is desirable with other adhesive applications) is avoided by using specialized fillers so that easy release is ensured.

## Brief Description of the Drawing

The present invention will now be explained in greater detail with reference to the drawing, the schematic views of which show the structure of two embodiments of the invention. Like numbers refer to like parts in the several views.

FIG. 1 shows an embodiment in which the filler-loaded layer and the layer containing little or no filler have about the same caliper;

FIG. 2 shows a second embodiment in which the filler-loaded layer provides a major portion of the total caliper of both layers.

## Detailed Description

3

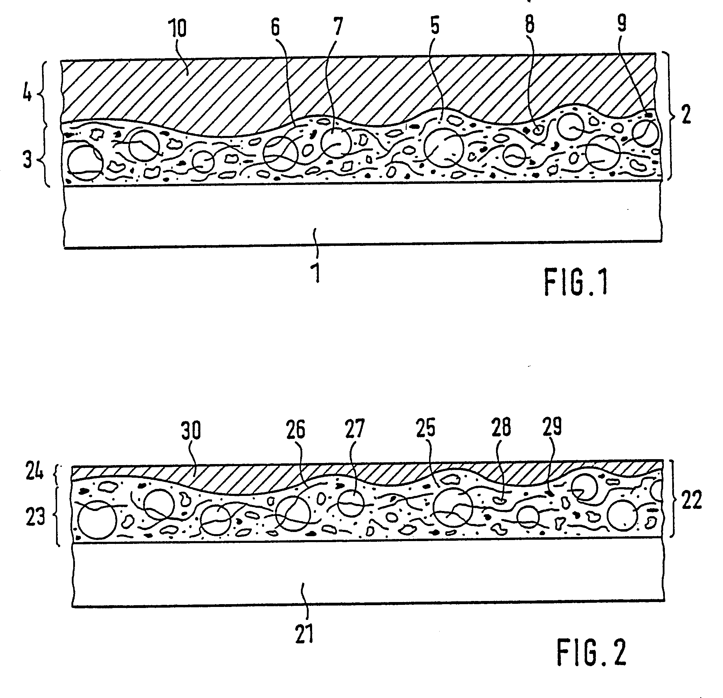

As shown in FIG. 1, adhesion-repellent supporting film or backing 1 is provided with adhesive film 2, which consists of first layer 3 adjacent backing 1 and second layer 4 coated on top of first layer 3. First layer 3 comprises an adhesive matrix 5 in which are incorporated hollow microspheres 7 and optionally one or more of short fibers 6, wax particles 8 or fumed silica 9. Second layer 4, which consists essentially of adhesive 10, contains little or no filler material and forms, together with adhesive matrix 5 of first adhesive layer 3, a continuous adhesive matrix, thereby precluding delamination or any other undesirable interaction between layers 3 and 4, particularly a migration of resin molecules.

The structure of the embodiment shown in FIG. 2 is similar to that in FIG. 1, but involves a modification which is explained below. According to this embodiment, adhesion-repellent backing 21 is provided with adhesive film 22, which consists of first layer 23 adjacent backing 21 and second layer 24 on top of first layer 23. First layer 23 comprises adhesive matrix 25 in which are incorporated short fibers 26, hollow microspheres 27, wax particles 28 and/or fumed silica 29. Second layer 24 consists only of adhesive 30 and is applied in a amount just sufficient to even out the surface irregularities of layer 23 caused by the filler particles. As in FIG. 1, layer 24 forms, together with adhesive matrix 25 of first adhesive layer 23, a continuous adhesive matrix.

## Detailed Description

Understanding of the invention will be enhanced by referring to the following illustrative but nonlimiting examples, in which all parts and percentages are by weight unless otherwise noted.

## Example 1

The adhesive for the filler-loaded releaseable layer on the backing side of the adhesive film is prepared by initially dissolving the rubber and the resin in an aliphatic hydrocarbon solvent such as heptane and then dispersing the filler in the solution. The formulation used in this example is as follows:

| | |
|---|---|
| Synthetic ABA block copolymer rubber of the styrene-isoprene-styrene type ("Cariflex" 1107) | 52 parts (26.9 vol.%, density = 0.92 g/ml) |
| Resin (ECR-366) | 47 parts (23.1 vol.%, density = 0.95 g/ml) |
| Micropowder wax ("Ceridust" 9615A) | 7.5 parts (3.6 vol.%, density = 0.98 g/ml) |
| Hollow polymer microspheres ("Expancel" DE 551) | 3.5 parts (45.4 vol.%, density = 0.03 g/ml) |
| Glass fibers | 6.0 parts (1 vol.%, density = 2.5 g/ml) |
| Inhibited phenolic antioxidant ("Irganox" 1076) | 1.0 part |
| Benztriazol UV stabilizer "Tinuvin" P | 0.5 part |

The amount of solvent is selected to provide 25 to 30% solids.

The higher-strength adhesive on the off-backing side of the adhesive film is prepared as described above, but omitting the filler materials.

A finished adhesive tape is obtained by first coating the adhesive solution on a silicone-sized release liner and then evaporating the solvent to obtain a dry adhesive 45 to 50 $\mu$m thick. Thereafter, a second layer comprising the filler-free adhesive solution is applied over the first dried adhesive layer, with the second layer, after drying, being about 20 to 25 $\mu$m thick.

## Example 2

Example 2 differs from Example 1 in that the filler-loaded adhesive layer comprises a blend of 60% styrene-isoprene-styrene rubberand 40% styrene-ethylene-butylene-styrene rubber ("Kraton" G-1652) instead of the unblended styrene-isoprene-styrene rubber ("Cariflex" 1107). The composition of the off-backing adhesive layer is identical to that of the corresponding adhesive composition specified in Example 1.

## Example 3

Example 3 differs from Example 1 in both the type of rubber and the amount of filler in the backing-side adhesive layer. These differences are demonstrated by the following data:

| | |
|---|---|
| Mechanically decomposed natural rubber with 20% zinc oxide | 87.5 parts |
| Resin | 30 parts |
| Micropowder wax | 10 parts |
| Hollow polymer microspheres | 3.5 parts |
| Inhibited phenolic antioxidant ("Wingstay") | 1.0 part |
| Benztriazol UV stabilizer ("Tinuvin" P) | 1.0 part |

The composition of the off-backing adhesive layer is as specified above, but does not contain filler.

Table 5 shows the properties of the adhesive tape according to the above examples.

The following test methods were used in evaluating the pressure-sensitive adhesive products:

### 90° Peel Test of the Backing Side of the Film

The sample is placed with the adhesive up on a smooth surface and a 5-cm length of masking tape (3M Masking Tape No. 202) is placed thereover with the adhesive side down. A 2-kg roller is passed once over this laminate. Thereafter, a 2.54 cm x 25.4 cm piece is cut from the laminate and the backing removed carefully. This sample is placed on the cleaned test panel with the adhesive side down and the 2-kg roller is passed over it once in each direction with a speed of approximately 300 mm/min. After a waiting time of 20 minutes at room temperature, 3 days at 50° C, or 5 days at room temperature, the sample is clamped in a tensile machine in such a manner that the sample strip may be withdrawn at a 90° angle. The withdrawal speed is about 300 mm/min.

Conventionally, the test panel is wiped clean once with cellulose sheets soaked with methylethylketone and three times with cellulose sheets soaked with heptane. For the peel strength measurement on paper, copying-machine paper is bonded to a suitable steel panel by means of double-coated adhesive tape (3M Adhesive Tape No. 4193). The paper surface is not cleaned beforehand. Peel strength below 1 N/cm, without adhesion buildup, is desirable.

### 90° Peel Test of the Top Side of the Film

A 2.54 cm x 25.4 cm piece is cut from the sample and placed with the adhesive against the cleaned test platen. A 2.0-kg roller is rolled once in each direction over the piece at a speed of 300 mm/min. Thereafter, the backing is carefully removed and a 2.54-cm length of masking tape (3M Masking Tape No 202) is placed thereover, with the two adhesive surfaces in contact with each other.

A 2-kg roller is passed over the laminate once in each direction at a speed of about 300 mm/min.

Peel adhesion is measured as on the backing side of the film.

### Static Shear on Paper

A 2.54 cm x 7.62 cm is placed with the adhesive side up on a smooth surface. A 2.54-cm wide paper strip is placed thereover to cover an 2.54 cm x 25.4 cm area. The overstanding adhesive tape is cut away and the release liner backing carefully removed.

This sample is placed on a panel 12.7-cm x 5.1-cm covered with copying machine paper so that the adhesive film is located about 5 mm from the lower edge of the panel.

Thereafter, a 6.8-kg roller is rolled over the sample once in each direction at a speed of about 300 mm/min. After a 10-minute wait, the sample is suspended in a fixture with the paper strip hanging down and the longitudinal axis of the panel vertical. A 500 g weight is attached to the paper strip and the time until the weight pops off at room temperature is recorded.

## Static Shear on Steel

As explained above, but subject to the following changes:
- Stainless steel strip 2.54 cm wide and 0.1 cm thick instead of a paper strip;
- Polished stainless steel panel instead of a panel covered with copying machine paper;
- 1000-g weight.

## Tearing Length

A 1.27 cm x 12.7 cm piece is cut from the test sample and placed on a smooth surface with the adhesive side up. The adhesive film is covered by 1.27-cm x 12.7-cm piece of release liner material in such a manner as to leave an adhesive area 1.27 cm x 2.54 cm exposed at one end.

The exposed adhesive portion is placed on a piece of copying machine paper and a 2-kg roller is passed over it once in each direction at a speed of about 300 mm/min. Thereafter, the covered end of the sample is pulled parallel to the paper surface until the adhesive film breaks. The length at break is the tearing length.

Tables 1 to 5 further explain the invention.

The values in Tables 1 to 3 were obtained by measurements conducted on single-coated samples. These tables show that a conventional pressure-sensitive acrylic adhesive incorporating hollow polymer microspheres does not provide the desired properties (reduced adhesion build-up, improved cohesion) that render the inventive adhesive tape outstanding.

Table 1 shows how the filler influences release properties. As will be seen, the $90°$ peel strength is undesirably high without the filler, the adhesive power building up after three days at $50°$ C. The filler reduces the peel adhesion to a desirable level while avoiding an increase in adhesive strength, as required to ensure reuse of the tape (consistent release properties).

The $90°$ peel strength values for acrylic adhesives in the second part of Table 1 shows that these adhesives are characterized by either too high an initial peel strength or by an excessive increase upon aging.

Table 2 shows the influence of resins on the tearing properties of the tape. The table compares two different basic adhesives. The first is a conventional synthetic rubber adhesive of the ABA block copolymer type ("Cariflex") with a solid resin ("Escorez" 1310, C5 hydrocarbon resin, softening point $91°$ C) and a liquid resin ("Zonerez" A25, an alpha-pinene-based liquid resin with a softening point of $25°$ C). This adhesive is compared with the inventive adhesive film. The respective formulas are similar in the amount of rubber and show identical peel strengths on stainless steel. The tearing properties of the inventive adhesive layer are far superior to the conventional adhesive.

Table 3 shows the influence of the hollow polymer microspheres on the inner strength (cohesion) of the adhesive composition. The table compares the static holding power in shear of a "Cariflex" 1107 rubber tackified with a combination of "Escorez" 1310 and "Zonarez" A25 and filled with "Expancel" hollow microspheres, with a corresponding formula not comprising a filler. As will be seen, adding the filler substantially increases the inner strength of the adhesive composition.

Considering the adhesive given first in Table 3, adding the filler significantly increases the static shear strength, i.e., from 210 to 1,620 minutes. In contrast, the other adhesive combinations in Table 3 show minor increases in static shear strength which are unacceptable.

Table 4 shows that the fibers do not substantially improve (i.e., shorten) the tearing length; their most important function is to produce a tape edge which looks clean after the adhesive film has been torn apart. In other words, the fibers suppress the adhesive film's tendency to snap back and form an unsightly lump

6

of adhesive. Table 4 also shows that fibers rating "good" have lengths from 4 to 6 mm, diameters of 12 to 16 μm and a high stiffness. According to Table 4, fibers 1 and 4 have the required length, stiffness and diameter properties.

Table 5 shows the properties of adhesive tapes exemplary of the present invention. The table compares the peel strength of both sides of the adhesive tape relative to two substrate surfaces. The table also demonstrates the high static holding power in shear on these two substrate surfaces.

The following adhesives 1 - 4 appear in Tables 1 and 3:

Control Adhesive 1: Commercial solvent-based acrylate adhesive

Control Adhesive 2: Commercial hot-melt acrylate adhesive

Control Adhesive 3: Commercial 90:10 isooctylacrylate: acrylic acid solvent-based adhesive

Control Adhesive 4: 100 parts synthetic rubber of the ABA block copolymer type, 135 parts solid resin ("Escorez" 1310) and 68 parts liquid resin ("Zonarez" A25).

As used in the tables that follow, various terms have the measurin indicated:

ABA rubbery block copolymer "Cariflex" 1107

Resin: ECR-366

Hollow polymer microspheres: "Expancel" DE 551

Hydrophobic fumed silica: "Aerosil" R-972

Micropowder wax: "Ceridust" 9615A

Hollow glass microspheres: 3M C 15/250

Adhesive film thickness is 90-100 um unless otherwise noted.

Table 1

| Adhesive | Filler | 90° Peel Strength (N/cm), Backing Side on Paper | |
| --- | --- | --- | --- |
| | | 20 minutes Room Temp. | 3 days 50° C |
| 45% synthtic ABA block copolymer rubber 55% resin | None | 3.9 | 5.9 |
| Do | 3.5 pph hollow polymeric microspheres | 2.9 | 2.8 |
| Do | 3.5 pph hollow polymeric microspheres + 10 pph hydrophobic fumed silica | 1.5 | 1.2 |
| Do | 3.5 pph hollow polymer microspheres + 10 pph micropowder wax | 0.9 | 1.0 |
| Control adhesive 1 | - | 6.1 | 8.1 |
| Do | 3pph hollow polymeric microspheres | 5.2 | 6.8 |
| Control adhesive 2 | - | 8.8 | 14.8 |
| Do | 3 pph hollow polymeric microspheres | 1.1 | 2.8 |
| Control adhesive 4 | - | 14.7 | 17.2 |
| Do | 15 pph hollow glass microspheres | 4.5 | 4.4 |

Table 2

| Adhesive | 90° Peel Strength on Steel (N/cm) | Tearing Length (cm) |
| --- | --- | --- |
| 40% ABA rubbery block copolymer; 60% solid resin ("Escorez" 1310) and liquid resin ("Zonarez" A25) | 6.3 | > 30 cm |
| 42.5% rubbery ABA block copolymer; 57.5% resin | 6.3 | 3 - 8 |

7

Table 3

| Adhesive | Filler | Static Shear on Stainless Steel (2.54 cm x 1.27 cm Room Temp., 500 g), minutes |
|---|---|---|
| Rubbery ABA block copolymer and resin | - | 210 (cohesion) |
| Ditto | 3 pph hollow polymeric microspheres (44 volume %) | 1620 (cohesion) |
| Control adhesive 1 | - | 12 (no cohesion) |
| Do | 3 pph hollow polymeric microspheres | 16 (no cohesion) |
| Control adhesive 2 | - | 210 (no cohesion) |
| Do | 3 pph hollow polymeric microspheres | 322 (pop) |
| Control adhesive 3 | - | 232 (no cohesion) |
| Do | 3 pph hollow polymeric microspheres | 358 (no cohesion) |
| Control adhesive 4 | - | 209 (no cohesion) |
| Do | 15 pph hollow glass microspheres (48 volume %) | 471 (no cohesion) |

Table 4

All adhesives contain 45% synthetic rubber of the ABA block copolymer type ("Cariflex" 1107), 55% resin (ECR-366) and 3.5 pph hollow polymer microspheres ("Expancel" 551 DE). The dry adhesive film has a caliper of 45 to 50 $\mu$m.

| Type of Fiber | Tearing Length (cm) | Edge Appearance | | |
|---|---|---|---|---|
| None | 2.4 - 5.8 | poor | | |
| 2.5 pph fiber 1 | 2.2 - 4.2 | good | | |
| 2.5 pph fiber 2 | 6 - 9.6 | poor | | |
| 1.8 pph fiber 3 | 2.7 - 5.9 | poor | | |
| 4.0 pph fiber 4 | 3.8 - 6.6 | good | | |
| Type of Fiber | | Length | Diameter | Elongation at Break |
| Fiber 1 | Polyacrylonitrile ("Dralon" ATF 1055/1,5) | 4 mm | 16 $\mu$m | 9 - 13% |
| Fiber 2 | Polyacrylonitrile ("Dralon" ATF 1055/2,5) | 4 mm | 22 $\mu$m | 9 - 13% |
| Fiber 3 | Polyacrylontrile ("Dralon" Dhm 6,7/6) | 6 mm | 28 $\mu$m | 30 - 40% |
| Fiber 4 | Glass fiber | 6 mm | 12 $\mu$m | - 1% |

Table 5

| | Example 1 | | | | Example 2 | | | | Example 3 | | | |
|---|---|---|---|---|---|---|---|---|---|---|---|---|
| | Backing Side | | Off-Backing Side | | Backing Side | | Off-Backing Side | | Backing Side | | Off-Backing Side | |
| | 20 min RT | 3 days 50°C | 20 min RT | 3 days 50°C | 20 min RT | 3 days 50°C | 20 min RT | 3 days 50°C | 20 min RT | 3 days 50°C | 20 min RT | 3 days 50°C |
| 90° peel strength, N/cm | | | | | | | | | | | | |
| on paper | 1.0 | 0.9 | 1.8 | paper delaminated | 0.8 | 0.4 | 1.0 | 1.6 | 0.3 | 1.0 | 0.7 | 3.2 |
| on stainless steel | 1.7 | 2.0 | 2.7 | 2.6 | 2.3 | 1.2 | 3.4 | 2.8 | 0.5 | 1.4 | 0.6 | 1.5 |
| Static Shear, minutes | | | | | | | | | | | | |
| on paper | 10,000 + | | 10,000 + | | 3293* | | 3000 + | | 10,000 + | | 10,000 + | |
| stainless steel | 10,000 + | | 10,000 + | | 10,000 + | | 10,000 + | | 10,000 + | | 10,000 + | |
| Tearing length (cm) | 1.5 - 2 | | | | 1.9 - 2.5 | | | | 2.8 - 3.6 | | | |

*Adhesive defect from opposite side

RT = Room Temperature

EP 0 401 509 A1

## Claims

1. Adhesive tape comprising an adhesion-repellent backing provided on one side with a transferrable pressure-sensitive adhesive film consisting of an adhesive matrix loaded with filler materials, comprising hollow polymeric microspheres, especially elastic, non-tacky hollow thermoplastic microspheres, wherein the adhesive comprises a rubber-resin adhesive, the amount of filler one side of the adhesive film being greater than on the opposite side, the types and relative amounts of filler and adhesive being so selected that the adhesive film has a relatively higher adhesive power on the low-filler side so that the adhesive film adheres permanently to an article after having been transferred thereto, the adhesive film tearing off easily after having been applied to the article, and the adhesive film having a relatively lower adhesive power on the high-filler side so that the article may be releasably applied to a substrate together with the adhesive film.

2. Adhesive tape as in claim 1, wherein the amount of filler in the adhesive film is 20 to 70 volume % on the backing side and 0 to 20 volume % on the off-backing side of the adhesive film.

3. Adhesive tape as in claim 1, wherein the adhesive film is formed of two layers, with only the layer adjacent the backing containing filler material.

4. Adhesive tape as in claim 3, wherein the two layers of the adhesive film have different rubber-resin adhesives, one of said adhesives having a higher adhesive power than the other.

5. Adhesive tape as in any one of the preceding claims, wherein the adhesive film has a caliper of 30 to 150 $\mu$m, preferably 50 to 70 $\mu$m.

6. Adhesive tape as in claim 3, wherein the caliper of the high-filler layer on the backing side of the adhesive film makes up a major portion of the caliper of the total adhesive film caliper, and in that the caliper of the filler-free layer on the off-backing side of the adhesive film substantially evens out the surface irregularities caused by the filler particles.

7. Adhesive tape as in any one of the preceding claims, wherein the filler includes at least one of hollow microspheres, wax particles, hydrophobic fumed silica and fibers.

8. Adhesive tape as in claim 7, wherein the fibers are of glass or a polymeric material and have a length of 2 to 8 mm and a diameter of 10 to 30 $\mu$m.

9. A process of making the tape of any of the preceding claims, characterized by applying to an adhesion-repellent backing a first coat comprising a blend of a pressure-sensitive adhesive composition and of a filler material, and by applying to the first coat a second coat comprising only the adhesive composition and a filler in a relative amount lower than that of the filler in said first coat.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | GB-A-2 019 248 (3M) --- | | C 09 J 7/02 |
| A | DE-A-1 594 046 (WILH. JACKSTÄDT & CO.) --- | | |
| A | US-A-4 376 151 (MOORE BUSINESS FORMS) ----- | | |

TECHNICAL FIELDS
SEARCHED (Int. Cl.5)

C 09 J

The present search report has been drawn up for all claims

| Place of search | Date of completion of the search | Examiner |
|---|---|---|
| THE HAGUE | 20-09-1990 | BUSCAGLIONE Y. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P0401)